# EUROPÄISCHE PATENTANMELDUNG

(11) **EP 4 401 250 A1**
(43) Veröffentlichungstag der Anmeldung: **17.07.2024**
(21) Anmeldenummer: 23151312.8
(22) Anmeldetag: 12.01.2023
(51) Int. Cl.: H01R 31/06, H01R 13/66, H01R 13/633, H01R 24/68, H02J 7/00, H01R 13/447

(54) **SPANNUNGSVERSORGUNGSADAPTER UND STECKDOSENVORRICHTUNG**

(71) Anmelder: Hugo Brennenstuhl GmbH & Co. Kommanditgesellschaft, 72074 Tübingen (DE)
(72) Erfinder: Weik, Christian, 72766 Reutlingen-Mittelstadt (DE); Räbiger, Sven, 72074 Tübingen (DE); Bock, Alexander, 72622 Nürtingen-Raidwangen (DE)
(74) Vertreter: Patentanwälte Magenbauer & Kollegen Partnerschaft mbB

(57) **Zusammenfassung**

Bei einem Spannungsversorgungsadapter, mit einem eine Höhenachse (13) aufweisenden Adaptergehäuse (14), mit einem Einsteckabschnitt (15), der in einer Gebrauchsstellung in einer Steckdosenaufnahme (18) einer Steckdose (17) aufgenommen ist, und mit einem wenigstens einen Spannungsversorgungsanschluss (30) aufweisenden Anschlussabschnitt (16), wobei im Adaptergehäuse (14) eine Spannungswandlerelektronik (31) zum Umwandeln einer Netzspannung in eine USB-Spannung aufgenommen ist, ist die die Spannungswandlerelektronik (31) in einem in dem Einsteckabschnitt (15) ausgebildeten und durch den Anschlussabschnitt (16) verschlossenen Aufnahmeraum (21) zumindest teilweise aufgenommen.

## Beschreibung

Die Erfindung betrifft einen Spannungsversorgungsadapter mit einem eine Höhenachse aufweisenden Adaptergehäuse, mit einem Einsteckabschnitt, der in einer Gebrauchsstellung in einer Steckdosenaufnahme einer Steckdose aufgenommen ist, und mit einem wenigstens einen Spannungsversorgungsanschluss aufweisenden Anschlussabschnitt, wobei im Adaptergehäuse eine Spannungswandlerelektronik zum Umwandeln einer Netzspannung in eine USB-Spannung aufgenommen ist.

Derartige Spannungsversorgungsadapter sind bereits seit langem bekannt und dienen vor allem als Ladeadapter zum Aufladen von elektronischen Geräten wie Smartphones oder dergleichen. Eine gängige Variante ist, dass solche Spannungsversorgungsadapter mit einem Spannungsversorgungsanschluss versehen sind und somit auch als USB-Adapter bezeichnet werden können. Da bei derartigen Adaptern der Bedarf besteht, eine Netzspannung, beispielsweise im Bereich von 110 Volt oder 230 Volt, in eine Versorgungsspannung umzuwandeln, die in der Regel deutlich geringer ist (ca. 5V bei einem USB-Anschluss), benötigt die Spannungswandlerelektronik in Folge der nicht zu vernachlässigenden Zahl der Elektronikkomponenten einen gewissen Platzbedarf. Dies führt dazu, dass die gängigen Spannungsversorgungsadapter eine nicht unerhebliche Bauhöhe aufweisen und vor allem im Gebrauchszustand, in dem sie in die Steckdosenaufnahme einer zugeordneten Steckdose eingesteckt sind, nicht unerheblich aus dem Steckdosentopf nach oben vorstehen.

Aufgabe der Erfindung ist es daher, einen Spannungsversorgungsadapter der eingangs erwähnten Art zu schaffen, der sich gegenüber dem aus dem Stand der Technik bekannten Spannungsversorgungsadaptern durch eine kompaktere Bauform auszeichnet.

Diese Aufgabe wird durch einen Spannungsversorgungsadapter mit den Merkmalen des unabhängigen Anspruchs 1 gelöst. Weiterbildungen der Erfindung sind in den Unteransprüchen dargestellt.

Der erfindungsgemäße Spannungsversorgungsadapter zeichnet sich dadurch aus, dass die Spannungswandlerelektronik in einem in dem Einsteckabschnitt ausgebildeten und durch den Anschlussabschnitt verschlossenen Aufnahmeraum zumindest teilweise aufgenommen ist.

Beim Stand der Technik ist die Spannungswandlerelektronik in dem Anschlussabschnitt angeordnet, was dazu führt, dass der Anschlussabschnitt eine relativ große Bauhöhe einnimmt. Im Gebrauchszustand des Spannungsversorgungsadapters ist der Einsteckabschnitt in die zugeordnete Steckdosenaufnahme der Steckdose eingesteckt. Der Anschlussabschnitt hingegen ist nicht in der Steckdosenaufnahme aufgenommen und steht von der Steckdose je nach Lage der Steckdose nach oben oder seitlich ab. Da beim Stand der Technik die relativ viel Bauraum beanspruchende Spannungswandlerelektronik im Anschlussabschnitt aufgenommen ist, ragt ein nicht unerheblicher Teil des Spannungsversorgungsadapters, nämlich der bauhöhengroße Anschlussabschnitt, aus der Steckdosenaufnahme hervor.

Da beim erfindungsgemäßen Spannungsversorgungsadapter die Spannungswandlerelektronik zumindest teilweise im Einsteckabschnitt aufgenommen ist, kann der Anschlussabschnitt wesentlich flacher, also mit relativ geringer Bauhöhe ausgestaltet sein, was dazu führt, dass die Bauhöhe des Spannungsversorgungsadapters insgesamt geringer ist als beim Stand der Technik und der Spannungsversorgungsadapter im eingesteckten Gebrauchszustand wesentlich weniger weit aus der Steckdosenaufnahme herausragt.

In besonders bevorzugter Weise ist die Spannungswandlerelektronik vollständig im Aufnahmeraum des Einsteckabschnitts aufgenommen. Dadurch kann der Anschlussabschnitt mit minimaler Bauhöhe ausgestaltet werden.

Beispielsweise ist es möglich, den Anschlussabschnitt plattenförmig auszubilden. Zweckmäßigerweise beträgt eine entlang der Höhenachse des Adaptergehäuses ausgerichtete axiale Höhe des Anschlussabschnitts maximal 50% der axialen Höhe des Einsteckabschnitts.

Bei einer Weiterbildung der Erfindung weist der Anschlussabschnitt einen sich radial zur Höhenachse erstreckenden Anschluss-Querschnitt auf, der zumindest teilweise größer ist als ein sich ebenfalls radial zur Höhenachse erstreckender Einsteck-Querschnitt.

In besonders bevorzugter Weise ist am Anschlussabschnitt ein Ziehgriff angeordnet, mit dem ein Herausziehen des Spannungsversorgungsadapters aus dem eingesteckten Gebrauchszustand in der zugeordneten Steckdosenaufnahme der Steckdose ermöglicht ist.

In besonders bevorzugter Weise ist der Ziehgriff als Bügel ausgebildet. Alternativ ist es jedoch auch denkbar, dass der Ziehgriff als insbesondere am Anschlussabschnitt ausgebildeter Vorsprung ausgebildet ist, der von einem Finger des Benutzers hintergriffen werden kann, wodurch der Spannungsversorgungsadapter aus der Steckdosenaufnahme herausgezogen werden kann.

Ist der Ziehgriff als Bügel ausgebildet, eignet sich besonders ein Schwenkbügel, der schwenkbar zwischen einer Nichtgebrauchsposition und einer ausgeschwenkten Handhabungsposition insbesondere am Anschlussabschnitt gelagert ist.

Bei einer Weiterbildung der Erfindung weist der Einsteckabschnitt mehrere Anschlusspins zum Einstecken in zugeordnete Anschlussöffnungen der Steckdosenaufnahme auf. Das Steckerbild des Einsteckabschnitts kann je nach Bedarf in allen gängigen Steckervarianten ausgebildet sein, beispielsweise nach Art eines Schuko-Steckers oder in anderen europäischen oder außereuropäischen Ländern bekannten Steckervarianten, beispielsweise Stecker-Typ E oder dergleichen.

Zweckmäßigerweise weist der Einsteckabschnitt zwei sich diametral bezüglich der Höhenachse gegenüberliegende Führungsrippen auf, mit denen eine Führung des Einsteckabschnitts in zugeordnete Führungsnuten in der Steckdosenaufnahme erfolgen kann. Zusätzlich kann der Einsteckabschnitt noch mit Längsnuten ausgestaltet sein, in die beim Einführen in die Steckdosenaufnahme die Schutzkontakte der Steckdose entlang gleiten können.

In besonders bevorzugter Weise ist der Spannungsversorgungsanschluss als USB-Anschluss zum Umwandeln einer Netzspannung in eine USB-Spannung ausgebildet.

Zweckmäßigerweise ist der USB-Anschluss am Anschlussabschnitt als USB-A oder USB-C-Anschluss ausgestaltet.

Zweckmäßigerweise besteht der Spannungsversorgungsadapter aus Kunststoffmaterial.

Die Erfindung betrifft ferner eine Steckdosenvorrichtung, mit wenigstens einer eine Steckdosenaufnahme aufweisenden Steckdose, wobei die Steckdosenaufnahme umfangsseitig von einer Steckdosenwand begrenzt ist, die sich dadurch auszeichnet, dass in die Steckdosenaufnahme ein Einsteckabschnitt eines Spannungsversorgungsadapters nach einem der Ansprüche 1 bis 10 aufgenommen ist.

In besonders bevorzugter Weise ist der Steckdose ein mit der Steckdosenwand zusammenwirkender Steckdosendeckel zugeordnet, der in einer Schließstellung die Steckdosenaufnahme verschließt, wobei der Steckdosendeckel einerseits und der Anschlussabschnitt des Spannungsversorgungsadapters andererseits derart ausgebildet sind, dass der Steckdosendeckel auch bei mit dem Spannungsversorgungsadapter bestückter Steckdose in seine Schließstellung überführbar ist.

Der Spannungsversorgungsadapter kann also bei solchen Steckdosen auch bei geschlossenem Steckdosendeckel einsteckt bleiben. Dies wird durch die geringe Bauhöhe des Spannungsversorgungsadapters erreicht, insbesondere durch den mit einer minimalistischen Bauhöhe ausgestalteten Anschlussabschnitt des Spannungsversorgungsadapters.

Die Überhöhung der Steckdosenwand mittels des Anschlussabschnitts des Spannungsversorgungsadapters ist derart gering, dass der Anschlussabschnitt in einen an der Innenseite des Deckels ausgebildeten Hohlraum ohne weiteres aufgenommen werden kann, ohne das Schließverhalten des Deckels zu behindern.

Zweckmäßigerweise ist der Steckdosendeckel als Klappdeckel ausgebildet, der schwenkbar zwischen der Schließstellung und wenigstens einer Offenstellung gelagert ist. Bevorzugt sind Federmittel vorgesehen, die den Klappdeckel in die Schließstellung vorspannen. Als Alternative zum Klappdeckel sind auch andere Deckelarten denkbar, beispielsweise ein aufclipsbarer oder aufrastbarer Deckel oder ein Schraubdeckel.

Ein bevorzugtes Ausführungsbeispiel der Erfindung ist in der Zeichnung dargestellt und wird im Folgenden näher erläutert. In der Zeichnung zeigen:
- Figur 1: eine perspektivische Darstellung des erfindungsgemäßen Spannungsversorgungsadapters mit eingeklappten Bügel,
- Figur 2: der Spannungsversorgungsadapter mit ausgeklappten Bügel,
- Figur 3: einen Längsschnitt durch den Spannungsversorgungsadapter entlang der Linie III-III aus Figur 1,
- Figur 4: eine perspektivische Darstellung einer Ausführungsform der erfindungsgemäßen Steckdosenvorrichtung bei aufgeklappten Deckel und eingestecktem Spannungsversorgungsadapter,
- Figur 5: die Steckdosenvorrichtung von Figur 4 mit dem Deckel in der Schließstellung und
- Figur 6: einen Schnitt durch die Steckdosenvorrichtung von Figur 5 entlang der Linie VI-VI, wobei der Spannungsversorgungsadapter nicht geschnitten ist.

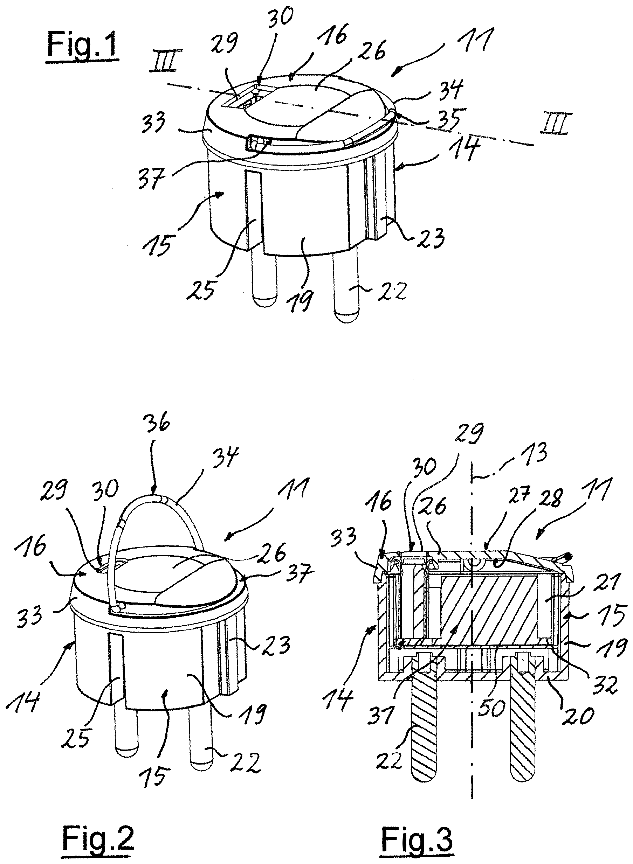

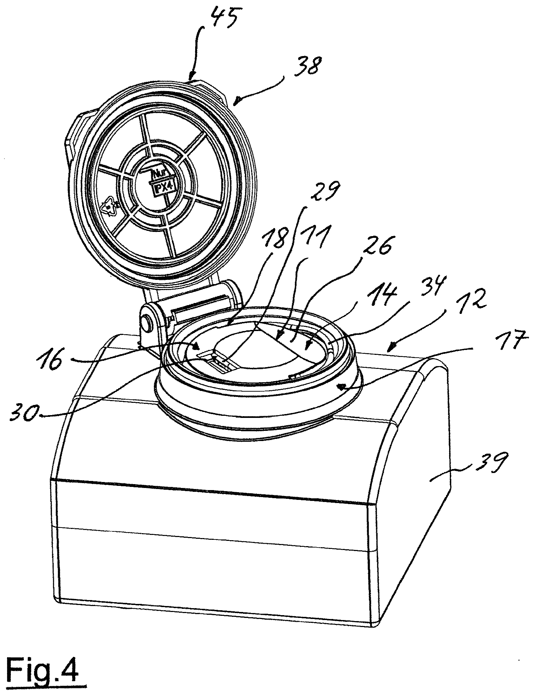

Die Figuren 1 bis 6 zeigen ein bevorzugtes Ausführungsbeispiel des erfindungsgemäßen Spannungsversorgungsadapters 11. Wie in den Figuren 4 bis 6 gezeigt, ist der Spannungsversorgungsadapter 11 dazu geeignet, in einer Steckdosenvorrichtung 12 aufgenommen zu werden. Der Spannungsversorgungsadapter ist in den Figuren beispielhaft als USB-Adapter dargestellt.

Wie insbesondere in den Figuren 1 und 2 gezeigt, besitzt der Spannungsversorgungsadapter 11 einen mit einer Höhenachse 13 (Figur 3) ausgestattetes Adaptergehäuse 14.

Das Adaptergehäuse 14 besteht zweckmäßigerweise aus Kunststoff, beispielsweise kann das Adaptergehäuse 14 ein Kunststoffspritzgieß-Bauteil sein.

Das Adaptergehäuse 14 besteht aus zwei Hauptkomponenten. Zum einen besitzt das Adaptergehäuse 14 einen Einsteckabschnitt 15 und zum anderen ist das Adaptergehäuse 14 mit einem Anschlussabschnitt 16 ausgestattet.

Das Adaptergehäuse 14 ist im gezeigten Beispielsfall zylindrisch ausgestaltet, kann jedoch auch andere dreidimensionale geometrische Ausgestaltungen aufweisen, beispielsweise Quader- oder kubusförmig ausgestaltet sein. Gängig ist jedoch die zylindrische Form, da der Spannungsversorgungsadapter dazu geeignet ist, in eine gängige zylindrisch ausgestaltete Steckdose 17 einer Steckdosenvorrichtung 12 eingesteckt zu werden.

Der Einsteckabschnitt 15 ist - wie erwähnt - dazu geeignet, in einer Gebrauchsstellung in einer Steckdosenaufnahme 18 einer Steckdose 17 aufgenommen zu werden.

Wie insbesondere in den Figuren 1 bis 3 gezeigt, besitzt der Einsteckabschnitt 15 eine in etwa zylindrische Gestalt und hat gegenüber dem Anschlussabschnitt 16 eine deutlich größere Bauhöhe. Der Einsteckabschnitt 15 besitzt eine Einsteckabschnitts-Wand 19, die zusammen mit einem insbesondere einstückig mit der Einsteckabschnittswand 19 ausgebildeten Einsteckabschnitts-Boden 20 einen Aufnahmeraum 21 umfangsseitig und unterseitig begrenzt (Figur 3).

Wie insbesondere in Figur 3 gezeigt, wird der Einsteckabschnitts-Boden 20 von Anschlusspins 22 durchsetzt, wobei im gezeigten Beispielsfall zwei Anschlusspins 22 vorgesehen sind. Die Anschlusspins 22 bestehen aus elektrisch leitfähigem Material, insbesondere Metallmaterial, beispielsweise Messingmaterial.

Wie insbesondere in den Figuren 1 und 2 gezeigt, besitzt der Einsteckabschnitt 15 insbesondere zwei an der Einsteckabschnitts-Wand 19 ausgebildete, sich diametral bezüglich der Höhenachse 13 gegenüber liegende Führungsrippen 23, mit denen eine Führung des Einsteckabschnitts 15 in zugeordneten Führungsnuten 24 in der Steckdosenaufnahme 18 ermöglicht ist. Die Führungsrippen 23 haben beispielsweise einen in etwa rechteckförmigen Querschnitt. Um insbesondere 90° versetzt zu den Führungsrippen 23 sind an der Einsteckabschnitts-Wand 19 zusätzlich noch insbesondere zwei Längsnuten 25 ausgebildet, die beim Einstecken an zugeordneten Schutzkontakten der Steckdosenaufnahme 18 entlang gleiten können.

Wie insbesondere in den Figuren 1 bis 3 gezeigt, gehört zum Adaptergehäuse 14 ferner noch der Anschlussabschnitt 16, der gegenüber dem Einsteckabschnitt 15 eine deutlich geringere Bauhöhe aufweist. Der Anschlussabschnitt 16 ist plattenförmig ausgebildet und besitzt einen Kappenbereich 26, der den Aufnahmeraum 21 oberseitig begrenzt. Der Kappenbereich 26 des Aufnahmeabschnitts 16 besitzt eine Oberseite 27 und eine zu der Oberseite 27 entgegengesetzt angeordnete Unterseite 28, wobei an der Oberseite 27 die Anschlussöffnung 29 eines Spannungsversorgungsanschlusses in Form eines USB-Anschlusses 30 ausmündet.

Im gezeigten Beispielsfall ist ein einzelner USB-Anschluss 30 gezeigt, der beispielsweise als USB-A-Anschluss (Figur 1) oder USB-C-Anschluss (Figur 2) ausgestaltet sein kann. Es sind jedoch auch andere Arten von USB-Anschlüssen denkbar, beispielsweise USB-B; Micro USB oder Mini USB. Ferner ist es möglich, mehr als einen USB-Anschluss vorzusehen, beispielsweise zwei oder drei USB-Anschlüsse.

Es ist durchaus denkbar auch andere Spannungsversorgungsanschlüsse als USB-Anschlüsse einzusetzen, der gängigste Spannungsversorgungsanschluss ist jedoch derzeit der USB-Anschluss 30.

Wie insbesondere in Figur 3 gezeigt, durchsetzt die Anschlussöffnung 29 des USB-Anschlusses 30 den Anschlussabschnitt 16 also den Kappenbereich 26 und erstreckt sich weiter in den Aufnahmeraum 21 hinein. Im Adaptergehäuse 14 ist eine Spannungswandlerelektronik 31 (Figur 3) zum Umwandeln einer Netzspannung in eine Versorgungsspannung, insbesondere USB-Spannung, aufgenommen.

Bei der Netzspannung handelt es sich um eine gängige Netzspannung, beispielsweise 110 Volt, 127 Volt, 220 Volt, 230 Volt oder 240 Volt. Die gängige USB-Spannung beträgt ca. 5 Volt. Bei USB Power Delivery kann die Spannung größer als 5V sein, beispielsweise bis zu 20V.

Ein wichtiger Aspekt der Erfindung ist, dass die Spannungswandlerelektronik 31 zumindest teilweise im Aufnahmeraum 21 des Einsteckabschnitts 15 aufgenommen ist.

Wie insbesondere in Figur 3 gezeigt, umfasst die Spannungswandlerelektronik 31 eine Platine 32, die sich im Wesentlichen über den gesamten Querschnitt des Aufnahmeraums 21 erstreckt, wobei die Platine 32 eine Vielzahl elektrischer Komponenten (nicht dargestellt) aufweist. Unterhalb der Platine ist eine beispielsweise aus Kunststoff bestehende Isolierplatte 50 (Figur 3) angeordnet, die sich vorzugsweise ebenfalls über den gesamten Querschnitt des Aufnahmeraums 21 erstreckt.

Die Anschlussöffnung 29 des USB-Anschlusses 30 erstreckt sich vorzugsweise bis zur Platine 32, kann alternativ aber auch kürzer sein. Ferner erstrecken sich die Anschlusspins 22 ebenfalls von der Unterseite her kommend bis zur Isolierplatte 50.

Wie insbesondere in Figur 3 gezeigt, besitzt der Anschlussabschnitt 16 zusätzlich zu dem Kappenbereich 26 noch einen Randbereich 33, der die Mantelfläche des Einsteckabschnitts 15 beziehungsweise die Einsteckabschnitt-Wand 19 umfangsseitig überragt.

Wie ferner insbesondere in den Figuren 1 und 2 gezeigt, ist am Anschlussabschnitt 16 ein Ziehgriff in Form eines Bügels 34 angeordnet. Dadurch wird das Herausziehen des Spannungsversorgungsadapters 11 aus dem eingesteckten Gebrauchszustand in der zugeordneten Steckdosenaufnahme 18 der Steckdose 17 ermöglicht.

Im gezeigten Beispielsfall ist der Bügel 34 als Schwenkbügel ausgebildet, der schwenkbar zwischen einer Nichtgebrauchsposition 35 und einer ausgeschwenkten Handhabungsposition 36 am Anschlussabschnitt 16 gelagert ist. Der Bügel 34 ist ferner noch, wie insbesondere in Figur 3 gezeigt, ungefähr in seiner Mitte in seiner Nichtgebrauchsposition nach oben abgeschrägt abgewinkelt, wodurch der Bügel 34 in seiner Nichtgebrauchsposition 35 durch den Finger eines Benutzers betätigt und hochgeschwenkt werden kann, um dann mittels des hochgeschwenkten Bügels 34 den Aussteckvorgang einzuleiten.

Zweckmäßigerweise ist im Kappenbereich 26 des Anschlussabschnitts 16 randseitig eine Bügelaufnahme 37 ausgebildet, wodurch der Bügel 34 in seiner Nichtgebrauchsposition 35 derart gelagert ist, dass er nicht seitlich über den Rand des Kappenbereichs 26 hinaussteht.

Wie bereits erwähnt, ist ein großer Vorteil des Spannungsversorgungsadapters 11 seine geringe Bauhöhe. Dadurch ist es möglich, den Spannungsversorgungsadapter 11 in eine zugeordnete Steckdose 17 einer Steckdosenvorrichtung 12 einzustecken, ohne dass der Spannungsversorgungsadapter 11 über den Rand der Steckdosenaufnahme 18 beziehungsweise das Steckdosennest hinausragt.

Dies ist insbesondere dann von Vorteil, wenn die Steckdose 17, wie insbesondere in den Figuren 4 bis 6 gezeigt, einen Steckdosendeckel 38 besitzt.

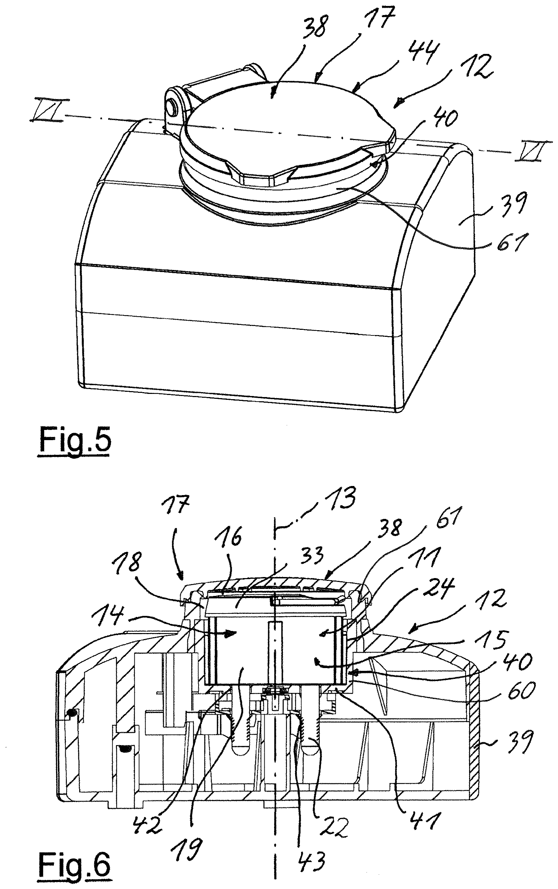

Wie insbesondere in Figur 6 gezeigt, besitzt die Steckdose 17 einen Steckdosenkörper 39, an dessen Oberseite die Steckdosenaufnahme 18 ausgebildet ist. Die Steckdosenaufnahme 18 wird umfangsseitig von einer Steckdosenwand 40 begrenzt. Im gezeigten Beispielsfall ist die Steckdosenwand 40 zweiteilig ausgebildet und besteht aus einem insbesondere aus Kunststoffmaterial besehendem Wand-Unterteil 60 und einem insbesondere aus Gummimaterial bestehenden Wand-Oberteil 61, wobei Letzteres als Dichtung fungiert. Unterseitig wird die Steckdose 17 durch einen Steckdosenboden 41 begrenzt, dem gemäß gezeigtem Ausführungsbeispiel zwei Anschlussöffnungen 42 ausgebildet sind, die jeweils einen Anschlusskontakt 43 aufweisen.

Wie insbesondere in Figur 6 gezeigt, sind die Anschlusspins 22 des Spannungsversorgungsadapters 11 in dessen Gebrauchszustand in die Anschlussöffnungen 42 eingesteckt und stehen in Kontakt mit den Anschlusskontakten 43.

Wie insbesondere die Zusammenschau der Figuren 4 und 5 gezeigt, verschließt der Steckdosendeckel 38 in seiner Schließstellung die Steckdosenaufnahme 18. Der Steckdosendeckel 38 einerseits und der Anschlussabschnitt 16 des Spannungsversorgungsadapters andererseits sind derart ausgebildet, dass der Steckdosendeckel 38 auch mit dem Spannungsversorgungsadapter 11 bestückter Steckdose 17 in seine Schließstellung überführbar ist.

Im gezeigten Beispielsfall ist der Steckdosendeckel 38 als Klappdeckel ausgebildet, der schwenkbar zwischen der Schließstellung 44 und wenigstens einer Offenstellung 45 gelagert ist. Zweckmäßigerweise endet die Oberseite des Anschlussabschnitts 16 des Spannungsversorgungsadapters 11 unterhalb der Oberkante der Steckdosenwand 40. Somit ist es möglich, dass der eingesteckte Spannungsversorgungsadapter 11 den Steckdosendeckel 38 beim Schließen nicht behindert.

Dadurch ist es möglich, dass der Spannungsversorgungsadapter 11 immer eingesteckt bleiben kann und der IP-Schutz der Steckdosenvorrichtung 12 trotzdem weiterhin garantiert ist. Bei dem IP-Schutz kann es sich beispielsweise um die Schutzart IP 44 handeln.

Die Steckdosenvorrichtung 12 kann ihrerseits beispielsweise Bestandteil eines Leitungsrollers, insbesondere Kabeltrommel sein.

## Patentansprüche

1. Spannungsversorgungsadapter, mit einem eine Höhenachse (13) aufweisenden Adaptergehäuse (14), mit einem Einsteckabschnitt (15), der in einer Gebrauchsstellung in einer Steckdosenaufnahme (18) einer Steckdose (17) aufgenommen ist, und mit einem wenigstens einen Spannungsversorgungsanschluss (30) aufweisenden Anschlussabschnitt (16), wobei im Adaptergehäuse (14) eine Spannungswandlerelektronik (31) zum Umwandeln einer Netzspannung in eine Versorgungsspannung aufgenommen ist, **dadurch gekennzeichnet, dass** die Spannungswandlerelektronik (31) in einem in dem Einsteckabschnitt (15) ausgebildeten und durch den Anschlussabschnitt (16) verschlossenen Aufnahmeraum (21) zumindest teilweise aufgenommen ist.

2. Spannungsversorgungsadapter nach Anspruch 1, **dadurch gekennzeichnet, dass** die Spannungswandlerelektronik (31) vollständig im Aufnahmeraum (21) des Einsteckabschnitts (15) aufgenommen ist.

3. Spannungsversorgungsadapter nach Anspruch 1 oder 2, **dadurch gekennzeichnet, dass** eine entlang der Höhenachse (13) des Adaptergehäuses (14) ausgerichtete axiale Höhe des Anschlussabschnitts (16) maximal 50% der axialen Höhe des Einsteckabschnitts (15) beträgt.

4. Spannungsversorgungsadapter nach einem der vorhergehenden Ansprüche, **dadurch gekennzeichnet, dass** der Anschlussabschnitt (16) plattenförmig ausgebildet ist.

5. Spannungsversorgungsadapter nach einem der vorhergehenden Ansprüche, **dadurch gekennzeichnet, dass** der Anschlussabschnitt (16) einen sich radial zur Höhenachse (13) erstreckenden Anschluss-Querschnitt aufweist, der zumindest teilweise größer ist als ein sich ebenfalls radial zur Höhenachse (13) erstreckender Einsteck-Querschnitt.

6. Spannungsversorgungsadapter nach einem der vorhergehenden Ansprüche, **dadurch gekennzeichnet, dass** am Anschlussabschnitt (16) ein Ziehgriff angeordnet ist, mit dem ein Herausziehen des Spannungsversorgungsadapters (11) aus dem eingesteckten Gebrauchszustand in der zugeordneten Steckdosenaufnahme (18) der Steckdose (17) ermöglicht ist.

7. Spannungsversorgungsadapter nach Anspruch 7, **dadurch gekennzeichnet, dass** der Ziehgriff als Bügel (34) ausgebildet ist, wobei vorzugsweise der Bügel als Schwenkbügel ausgebildet ist, der schwenkbar zwischen einer Nichtgebrauchsposition (35) und einer ausgeschwenkten Handhabungsposition (36) insbesondere am Anschlussabschnitt (16) gelagert ist.

8. Spannungsversorgungsadapter nach einem der vorhergehenden Ansprüche, **dadurch gekennzeichnet, dass** der Einsteckabschnitt (15) mehre Anschlusspins (22) zum Einstecken in zugeordnete Anschlussöffnungen (42) der Steckdosenaufnahme (18) aufweist.

9. Spannungsversorgungsadapter nach einem der vorhergehenden Ansprüche, **dadurch gekennzeichnet, dass** der Einsteckabschnitt (15) zwei sich diametral bezüglich der Höhenachse (13) gegenüberliegende Führungsrippen (23) aufweist zur Führung des Einsteckabschnitts (15) in zugeordneten Führungsnuten (24) in der Steckdosenaufnahme (18).

10. Spannungsversorgungsadapter nach einem der vorhergehenden Ansprüche, **dadurch gekennzeichnet, dass** der Spannungsversorgungsanschluss (40) als USB-Anschluss zum Umwandeln einer Netzspannung in eine USB-Spannung ausgebildet ist.

11. Steckdosenvorrichtung, mit wenigstens einer eine Steckdosenaufnahme (18) aufweisenden Steckdose (17), wobei die Steckdosenaufnahme (18) umfangsseitig von einer Steckdosenwand (40) begrenzt ist, **dadurch gekennzeichnet, dass** in die Steckdosenaufnahme (18) ein Einsteckabschnitt (15) eines Spannungsversorgungsadapters nach einem der Ansprüche 1 bis 10 aufgenommen ist.

12. Steckdosenvorrichtung nach Anspruch 12, **dadurch gekennzeichnet, dass** der Steckdose (17) ein mit der Steckdosenwand (40) zusammenwirkender Steckdosendeckel (38) zugeordnet ist, der in einer Schließstellung die Steckdosenaufnahme (18) verschließt, wobei Steckdosendeckel (38) einerseits und Anschlussabschnitt (16) des Spannungsversorgungsadapters (11) anderseits derart ausgebildet sind, dass der Steckdosendeckel (38) auch bei mit dem Spannungsversorgungsadapter (11) bestückter Steckdose (17) in seine Schließstellung überführbar ist.

13. Steckdosenvorrichtung nach Anspruch 12, **dadurch gekennzeichnet, dass** der Steckdosendeckel (38) als Klappdeckel ausgebildet ist, der schwenkbar zwischen der Schließstellung und wenigstens einer Offenstellung gelagert ist.
